# EUROPEAN PATENT APPLICATION

(11) **EP 2 182 454 A1**
(43) Date of publication of application: **05.05.2010**
(21) Application number: 09170738.0
(22) Date of filing: 18.09.2009
(51) Int. Cl.: G06F 17/30, G06F 17/27, G06F 3/023, G01C 21/36

(54) **Search device, search method, and computer-readable medium that stores search program**

(30) Priority: 29.10.2008 JP 2008278016
(71) Applicant: AISIN AW CO., LTD., Anjo-shi, Aichi-ken 444-1192 (JP)
(72) Inventor: Kawauchi, Hiroshi, Anjo-shi, Aichi-ken 444-1192 (JP)
(74) Representative: Intes, Didier Gérard André

(57) **Abstract**

A search device includes a first storage portion (56), a second storage portion (60), an input portion (41), and a character string presentation portion (104; 105; 106). The first storage portion (56) stores information that pertains to a search object in association with a first character string and a second character string that are used to search for the search object. When a search for the search object is performed, the second storage portion (60) stores the first character string and the second character string. The input portion (41) inputs a character string for searching for the search object. The character string presentation portion (104; 105; 106), when the character string is input by the input portion (41), searches the second storage portion (60) for and presents one of the first character string and the second character string that begin with a character string that matches the input character string.

## Description

The disclosure of Japanese Patent Application No. 2008-278016 filed on October 26, 2008, including the specification, drawings and abstract is incorporated herein by reference in its entirety.

### BACKGROUND OF THE INVENTION

### 1. Field of the Invention

The present invention relates to a search device, a search method, and a computer-readable medium that stores a search program, specifically a search device, a search method, and a computer-readable medium that stores a search program that learns a search character string that is set by a user.

### 2. Description of the Related Art

In recent years, the guiding of vehicles by navigation devices has come to be widely used.
The navigation device is provided with a function that searches for a route from a departure point to a destination, a function that utilizes sensors such as a Global Positioning System (GPS) satellite receiver, a gyroscope, or the like to detect the vehicle's position, a function that displays the route to the destination and the current position of the vehicle on a map, and the like.

The navigation device may include a function that accepts an input of a search character string from the user and sets the destination by searching for a destination name (facility name) or the like that matches the search character string, as does the navigation device for vehicle and storage medium described in Japanese Patent Application Publication No. JP-A-11-271084, for example.

### SUMMARY OF THE INVENTION

The applicants of the present application have developed, as an undisclosed technology, a technology that learns the spellings of destination names that have been selected by searches and, when first characters of a learned destination name are input, displays candidates for the input characters as a way of supporting the input of the search characters by the user.
For example, in a case where "MIE LAND", "MIE LANDPARK", and the like are presented as candidates based on an input of the search characters "MIELA" and "MIE LAND" is selected as the destination, the spelling "MIELAND" is learned (stored).
Thereafter, in a case where the search character "M" is input, the number of user input operations (the number of input characters) can be reduced by displaying the learned "MIELAND" as a candidate for the input search character.

In some cases, the destination data for a destination that is a search object is configured such that the search can be performed based not only on the spelling of the name, but also on the spellings of a nickname and a former name.
For example, in some cases, the destination data is configured such that the destination "MIE LAND" can be found using a spelling of "ELAN" for a nickname "ELAN", a spelling of "LANDPARKMIE" for a new name "LAND PARK MIE", and the like in addition to the spelling "MIELAND" for the name.
In this sort of case, the search can be conducted for the previously found destination "MIE LAND" based on a character string other than the spelling "MIELAND", such as the spelling of the nickname "ELAN", for example.
However, when the previous search was conducted using the former name "MIE LAND", only "MIELAND" was learned (stored). Therefore, even if the user knows the new name "LAND PARK MIE" and the nickname "ELAN" and inputs "L" or "E", the system cannot display "LANDPARKMIE" and "ELAN" as candidates for the input character, and cannot adequately support the input operation.

The present invention provides a technology that provides support for the input operation for a wider range of character strings.

According to a first aspect of the present invention, a search device includes a first storage portion, a second storage portion, an input portion, and a character string presentation portion. The first storage portion stores information that pertains to a search object in association with a first character string and a second character string that are used to search for the search object. The second storage portion, when a search for the search object is performed, reads from the first storage portion the first character string and the second character string for the search object and stores the first character string and the second character string that are read. The input portion receives the input of a character string for searching for the search object. The character string presentation portion, when the character string is input by the input portion, searches the second storage portion for and presents one of the first character string and the second character string that begin with a character string that matches the input character string.
According to a second aspect of the present invention, a computer-readable storage medium that stores computer-executable instructions stores information that pertains to a search object in association with a first character string and a second character string that are used to search for the search object in a first storage portion, reads the first character string and the second character string for the search object from the first storage portion when a search for the search object is performed and stores in a second storage portion the first character string and the second character string that are read, receives from an input portion the input of a character string for searching for the search object, and searches the second storage portion for and presents one of the first character string and the second character string that begin with a character string that matches the character string input by the input portion.

According to the present invention, the information that pertains to the search object, in association with the first character string and the second character string that are used to search for the search object, are stored in the first storage portion, the first character string and the second character string for the search object are stored in the second storage portion when a search for the search object is performed, and one of the first character string and the second character string that match the character string that is input is presented. It is therefore possible to perform searching and input support in relation to a search object that has been found previously, even when the input character string is different from the one that was used in the previous search.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a system configuration diagram of a navigation device;
FIG. 2 is an explanatory figure that conceptually shows contents of destination data that are contained in a destination data file;
FIG. 3A is an explanatory figure that conceptually shows contents of a learned data file;
FIG. 3B is an explanatory figure that conceptually shows the contents of the learned data file;
FIG. 4A is a figure that shows an example of a layout of a search character input screen in search processing;
FIG. 4B is a figure that shows another example of the layout of the search character input screen in search processing;
FIG. 5 is a figure for explaining a search results screen;
FIG. 6 is an explanatory figure that shows a search character input screen that is displayed by search processing and input support processing after learned data have been updated.

### DETAILED DESCRIPTION OF THE EMBODIMENTS

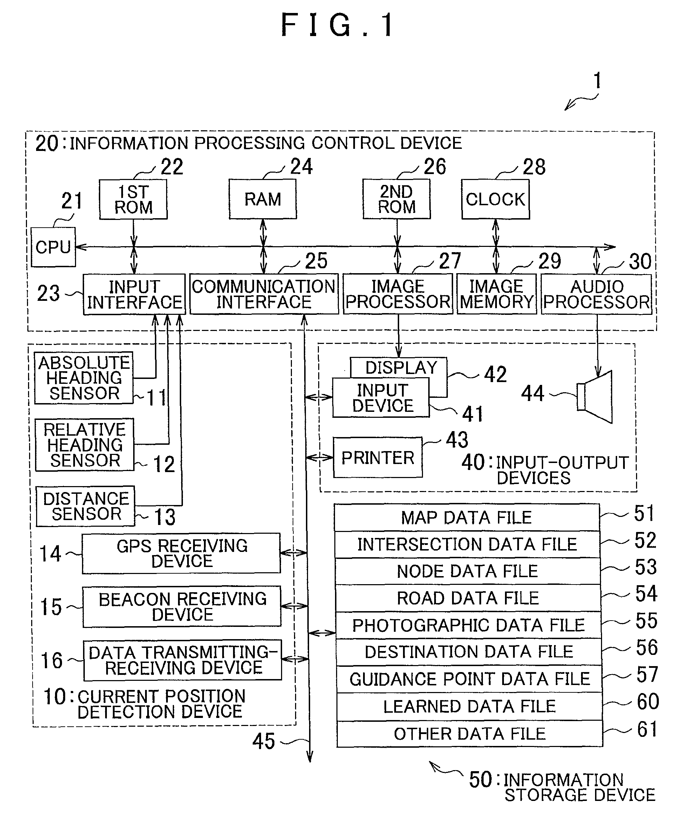

Hereinafter, an embodiment of the present invention will be explained in detail with reference to FIGS. 1 to 6, using as an example a case in which a search device is applied to a navigation device.

### (1) Overview of embodiment

A navigation device 1, when a user inputs a character string for searching, searches for destination data that corresponds to the character string and presents destination candidates to the user. The user refers to the presented destination candidates, selects a desired destination, and sets the destination.
The destination data contains facility information for a facility or the like that is set as the destination, including a name (declared information), coordinates (latitude, longitude), an address, a telephone number, and the like, and also contains keys for searching that are used to search for the facility or the like. For every facility, the keys for searching include a spelling of the facility name (a search key), and for facilities for which it is appropriate to do so, the keys for searching that are set also include spellings of nicknames and popular names, a spelling of a former name, and the like.
Further, the keys for searching (the search key, an alias, related information, and the like) that can be used to search for the facility or the like, that has been selected as the destination, are stored as learned data.
Thus, in a case where a search is conducted for a facility that has previously been found, an input character string candidate can be displayed even with respect to an input character string that is different from the character string that was input for the previous search, so by selecting the input character string candidate, the user can reduce the number of input operations that are required to search for the desired facility.

### (2) Details of the embodiment

FIG. 1 is a system configuration diagram of the navigation device 1, in which the present embodiment is implemented.
The navigation device 1 is installed in a vehicle and, as shown in FIG. 1, includes a current position detection device 10, an information processing control device 20, input-output devices 40, and an information storage device 50.
A configuration of the current position detection device 10 will be explained first. An absolute heading sensor 11 is a geomagnetic sensor that detects the direction in which the vehicle is facing, by using a magnet to detect the north direction, for example. The absolute heading sensor 11 may be any unit that detects an absolute heading.

A relative heading sensor 12 may be a sensor that detects, for example, whether or not the vehicle has turned at an intersection. It may also be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle may also be used as the relative heading sensor 12. In other words, the relative heading sensor 12 may be any unit that can detect an angle that changes in relation to a reference angle (the absolute heading).
A distance sensor 13 may, for example, detect and measure the rotation of a wheel or detect the acceleration and derive its second integral. In other words, the distance sensor 13 may be any unit that can measure a distance that the vehicle moves.

A Global Positioning System (GPS) receiving device 14 is a device that receives a signal from a man-made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to operation of the vehicle, such as Vehicle Information and Communication System (VICS) information, that is, information on traffic congestion, information on the vehicle's current position, parking information, and the like.

A data transmitting-receiving device 16 utilizes a telephone circuit or radio waves to perform communication and exchange information with other devices outside the vehicle.
For example, the data transmitting-receiving device 16 may be used in a variety of ways, such as a car telephone, and for ATIS, VICS, GPS correction, inter-vehicle communication, and the like, and it is capable of inputting and outputting information that relates to operation of the vehicle.

The vehicle is also provided with a vehicle speed sensor that measures the vehicle's speed, an acceleration sensor that measures acceleration, an accelerator sensor that measures the extent to which the accelerator pedal is depressed, a brake sensor that measures the extent to which the brake pedal is depressed, and the like, although these are not shown in the drawings.

The information processing control device 20 performs calculations and control based on information that is input from the current position detection device 10 and the input-output devices 40, as well as on information that is stored in the information storage device 50. The information processing control device 20 also performs control such that calculation results are output to an output portion such as a display 42, a printer 43, a speaker 44, or the like.

The configuration of the information processing control device 20 is described below.
A central processing unit (CPU) 21 performs overall calculations and control for the entire navigation device 1.
In the present embodiment, the CPU 21 stores, as the learned data, all of the keys for searching that can be used to search for the facility or the like that has been selected as the destination and also performs input support processing that reduces the number of input operations, based on the learned data.

A first ROM 22 stores programs that are related to navigation, specifically programs that are related to current position detection, route searching, displayed guidance, and the like.
The CPU 21 operates in accordance with the programs that are related to navigation in order to perform various types of processing, such as route guidance processing, route search processing, destination setting processing, input support processing, and the like.

An input interface 23 is a unit that receives information from the current position detection device 10.
A RAM 24 provides, for example, working memory for the information processing that the CPU 21 performs, storing data that the CPU 21 uses to display various types of screens, output values for the various types of sensors, information that the user has input, and the like.
More specifically, the RAM 24 stores information that the user inputs, such as the input character string for the destination search, destination information, information on a point that the vehicle passes, and the like that are input from an input device 41 that is described later. The RAM 24 also stores the results of calculations that the CPU 21 makes based on the information that is input by the user, route search results, and map information that is read in the information storage device 50.
A communication interface 25 inputs and outputs information from the current position detection device 10, particularly information that is acquired from outside the vehicle.

A second ROM 26 stores a navigation program that is related to voice guidance in particular. Note that the first ROM 22 and the second ROM 26 may also be configured from a single common ROM.
An image processor 27 takes vector information that is processed by the CPU 21 and processes it into image information.

A clock 28 keeps time.
An image memory 29 stores the image information that the image processor 27 processes.
An audio processor 30 processes audio information that is read in the information storage device 50 and outputs it to the speaker 44.

The input-output devices 40 include the input device 41, the display 42, the printer 43, and the speaker 44. The user uses the input device 41 to input data such as a destination, a point that the vehicle passes, a search condition, and the like. The display 42 displays an image. The printer 43 prints information. The speaker 44 outputs the audio information. The input device 41 may be configured, for example, from a touch panel, a touch switch, a joystick, a key switch, or the like.
A map of the area around the current position and a route to the destination are displayed on the display 42.

The information storage device 50 is connected to the information processing control device 20 through a transmission path 45.
The information storage device 50 stores a map data file 51, an intersection data file 52, a node data file 53, a road data file 54, a photographic data file 55, the destination data file 56, a guidance point data file 57, a learned data file 60, and an other data file 61.

The information storage device 50 is generally configured from an optical storage medium such as a DVD-ROM or a CD-ROM, or from a magnetic storage medium such as a hard disk or the like, but it may also be configured from any one of various types of storage media, such as a magneto optical disk, a semiconductor memory, or the like.
Note that for information that must be overwritten, the information storage device 50 may be configured from a hard disk, flash memory, or the like, and for other, fixed information, a ROM such as a CD-ROM, a DVD-ROM, or the like may be used for the information storage device 50.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like.
The guidance point data file 57 stores guidance data on geographical points where guidance is required, such as the content of a guidance display sign that is installed on a road, guidance for a branching point, and the like.

The destination data file 56 stores data related to the places, facilities, and the like that can be set as destinations, such as major tourist areas and buildings, companies, sales offices, and the like that are listed in telephone directories, and the like.

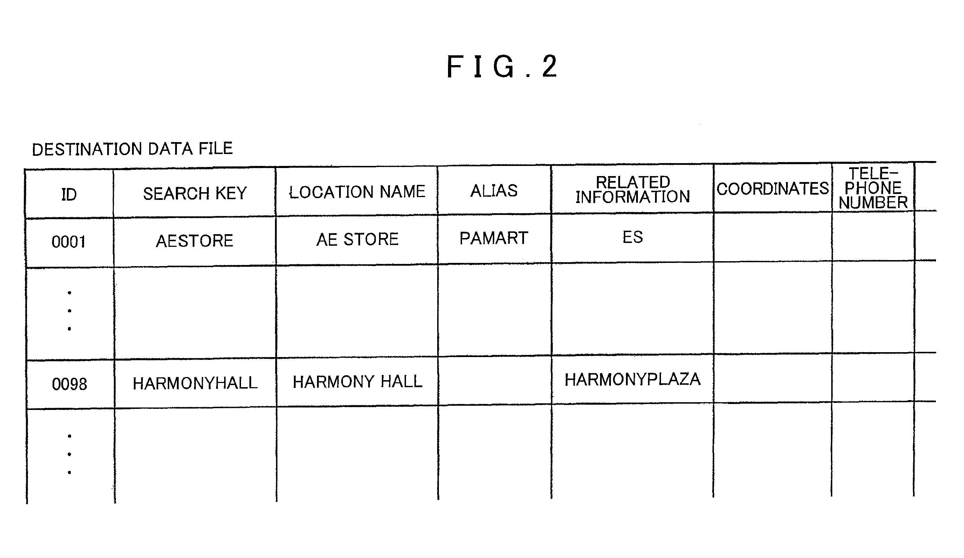

FIG. 2 conceptually shows contents of the destination data that are contained in the destination data file 56.
For each destination, an ID, the search key, a location name, an alias, related information, coordinates, a telephone number, and other data are stored in the destination data file 56.

The ID is an identification number for uniquely identifying the destination.
The search key is a (alphabetic) spelling of the location name and is the key that is compared to the character string that is input in order to search for the destination.
The location name is the declared name of the destination.

The alias is a (alphabetic) spelling of a name that is different from the current name of the destination, such as a former name, a name to which the name will be changed in the future (a future name), or the like.
The related information is a (alphabetic) spelling of an abbreviated name, a nickname, or the like that indicates the destination.
Note that the alias and the related information may be stored together.

The coordinates, the telephone number, and the other data are location information that provides details about the destination.
The coordinates are the latitude and the longitude of the geographical point where the destination is located. Note that information other than the latitude and the longitude may also be used, provided that the geographical point can be specified.
The telephone number is the telephone number of the destination facility.
The other data may include the address of the destination, the business hours and parking information if the destination is a shop or the like, area information such as "Minnesota", genre information such as "restaurant", and the like.

The keys that are used for searching for the destination include not only the search key, but also the alias and the related information.
The search key is set for every destination, while the alias and the related information are set for the destinations for which it is appropriate to do so.
When a destination is selected by a search, all of the keys that are used for searching for the destination, that is, the search key, the alias, and the related information (hereinafter collectively called the keys for searching), are stored as the learned data.

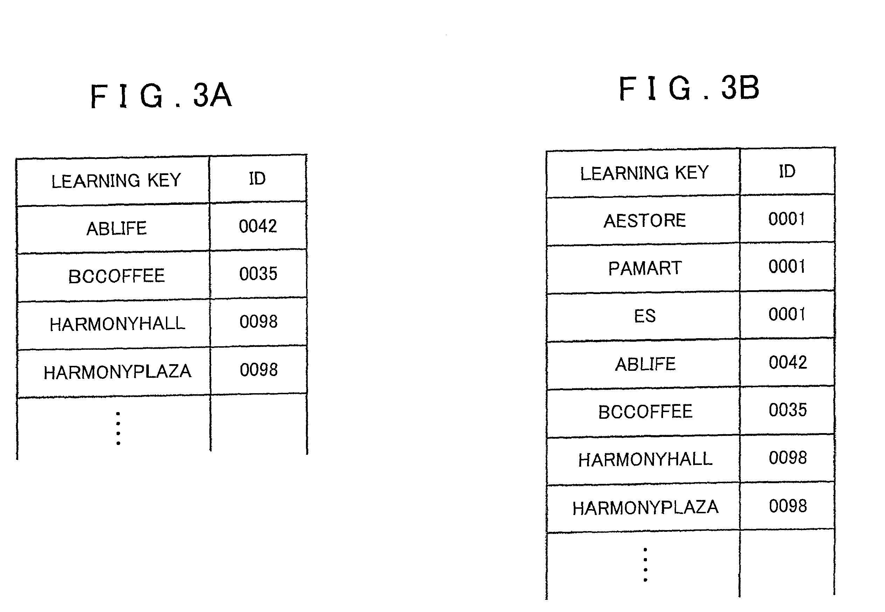

FIGS. 3A and 3B conceptually show the contents of the data that are stored in the learned data file 60.
The keys for searching (the search key, the alias, the related information) for the selected destination are stored as learned keys in the learned data file 60, along with the ID of the destination.
In the search processing, when the character string is input, the input support is performed by referring to the learned data file 60, searching for the learned keys (the spellings) that begin with a character string that matches the input character string, and displaying the matching learned keys on a screen as the input character string candidates that can be selected.

Note that it is not absolutely necessary for the destination ID to be stored in the learned data file 60. In that case, when one of the displayed input character string candidates is selected, the selected input character string candidate is used as the key for searching the destination data file 56.

In the navigation device 1 that is configured in this manner, route guidance is performed as described below.
The navigation device 1 detects the current position using the current position detection device 10, then reads map information for the area surrounding the current position from the map data file 51 in the information storage device 50 and displays the map information on the display 42.
The navigation device 1 then displays a search character input screen 100, a search results screen 200, or the like on the display 42 and accepts input of a destination from the input device 41.
The input device 41 is provided with a touch panel that is disposed on the display 42, and when the user touches an operation button that is displayed on the display 42, the navigation device 1 detects the selection of the operation button and accepts the setting of the destination by the user.

Then, when the destination has been input from the input device 41, the information processing control device 20 searches for (computes) a plurality of candidates for a route from the current position to the destination and displays the candidates on the map that is displayed on the display 42. When the driver selects one of the routes, the information processing control device 20 (a route acquisition portion) acquires the route by storing the selected route in the RAM 24.

Note that the information processing control device 20 may also acquire the route by transmitting the current position of the vehicle (or a departure point that is input) and the destination to an information processing center and receiving a route to the destination that has been found by the information processing center. In this case, the communication of the destination and the route is accomplished by wireless communication through the communication interface 25.
The user may also search for the route from the departure point to the destination by using an information processing device such as a personal computer or the like at home or elsewhere, then store the chosen route in a storage medium such as a USB memory or the like. The navigation device 1 may then acquire the route through a device that reads it from the storage medium. In this case, the device that reads the route from the storage medium is connected to the information processing control device 20 through the transmission path 45.

When the vehicle is in motion, the route guidance is performed by tracking the current position that is detected by the current position detection device 10.
The navigation device 1 specifies the vehicle's current position on the map by using map matching between the road data that corresponds to the chosen route and the current position that is detected by the current position detection device 10, then displays, on the display 42, the chosen route and the current position on the map of the area surrounding the current position of the vehicle.
Based on the relationship between the chosen route and the current position, the information processing control device 20 determines whether or not guidance is necessary. Specifically, in a case where the vehicle will continue to drive straight ahead for at least a specified distance, the information processing control device 20 determines whether or not route guidance and direction guidance are necessary for a specified road change point or the like. If guidance is necessary, the guidance is displayed on the display 42 and also provided by voice.

Next, the search processing according to the present embodiment, as well as the input support processing in the search processing, will be explained.

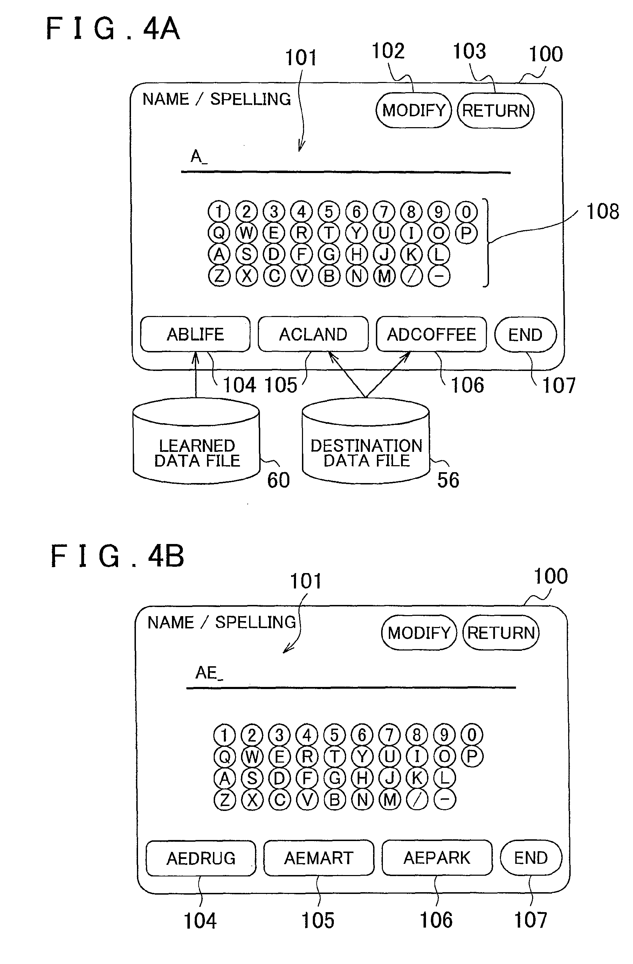

FIG. 4A is a figure that shows an example of a form of the search character input screen 100 that is displayed on the display 42.
The touch panel that serves as the input device 41 (FIG. 1) is provided on the face of the display 42, and when the user makes a selection by touching a button or the like that is displayed on the display 42, information that corresponds to the touched button can be input to the navigation device 1.

The search character input screen 100 is configured from a search character setting space 101, a Modify button 102, a Return button 103, character buttons 108, input character string candidate buttons 104 to 106, and an End button 107.
The search character setting space 101 is a space that displays the character string that the user has input, and in order to prompt further input, it also displays an underscore character after the (alphabetic) characters that have already been input.

The Modify button 102 is a button that modifies the input in the search character setting space 101, and if the search character setting space 101 is selected, for example, the navigation device 1 deletes the character string that is displayed in the search character setting space 101.
The Return button 103 is a button that returns the display to the screen that was displayed before the shift to the search character input screen 100.
The character buttons 108 are buttons for inputting alphabetic characters and symbols, and the navigation device 1 displays the characters that the user has selected in the search character setting space 101.

The End button 107 is a button for setting the input character string that has been input in the search character setting space 101.
Note that the destination data file 56 may be searched every time a character is input in the search character setting space 101, even before the End button 107 is selected, such that the eligible location information in the destination data file 56 is narrowed down in parallel with the inputs.

The input character string candidate buttons 104 to 106 display the input character string candidates that begin with a character string that matches the input character string that is displayed in the search character setting space 101.
For the input character string candidates, priority is given to displaying the learned keys that begin with a character string that matches the input character string, but in a case where there are no learned keys, as well as in a case where the number of the learned keys is less than the number of buttons (three in the present embodiment), keys for searching that begin with a character string that matches the input character string are extracted from the destination data file 56 and displayed.
When a character is input in the search character setting space 101, the navigation device 1 displays the input character string candidates that correspond to the character in the input character string candidate buttons 104 to 106.

For example, in the example that is shown in FIG. 4A, when the user inputs "A" in the search character setting space 101, the navigation device 1 searches for the learned keys in which the first letter is "A".
In this case, if the learned data file 60 is in the state that is shown in FIG. 3A, the search finds one learned data item, "ABLIFE", that begins with a character that matches the input character "A", so "ABLIFE" is displayed on the input character string candidate button 104.
Then, because the number of the learned data items that begin with a character that matches the input character "A" is less than the number of buttons, a search of the destination data file 56 is performed to find additional input character string candidates, and "ACLAND" and "ADCOFFEE" are displayed on the input character string candidate buttons 105 and 106.

In a case where a desired character string is displayed on the input character string candidate buttons 104 to 106, the user selects the appropriate button, causing the input character string candidate, that is displayed on the selected input character string candidate button, to be displayed in the search character setting space 101.
The user can thus reduce the number of character input operations. For example, in a case where "ABLIFE", which is displayed on the input character string candidate button 104, is selected, the process is completed in two operations, an input operation of the "A" character button 108 and the operation of selecting the input character string candidate button 104. In contrast to this, if all of the characters are input from the character buttons 108, six operations are required in order to input the six characters, so input support is provided to the user by reducing the number of operations by four.

In a case where the desired character string is not displayed on the input character string candidate buttons 104 to 106, the user uses the character buttons 108 to input the next character.
As shown in FIG. 4B, for example, if "E" is input after "A", the input character string "AE" is displayed in the search character setting space 101. In this case, there are no learned keys in the learned data file 60 that begin with character strings that match "AE", so "AEDRUG", "AEMART", and "AEPARK" are found in the destination data file 56 and displayed on the input character string candidate buttons 104 to 106.

When the user presses the End button 107 on the search character input screen 100, the character string that is displayed in the search character setting space 101 is established as the key for searching, the destinations that correspond to the established key for searching are found in the destination data file 56, and the destination candidates are displayed in list form on the search results screen 200.
When the user presses the End button 107 after selecting any one of the input character string candidate buttons 104 to 106, the input character string candidate that corresponds to the selected input character string candidate button is displayed on the search character setting space 101, the destination that corresponds to the input character string candidate is found in the destination data file 56 or the learned data file 60 and the destination candidates are displayed in list form on the search results screen 200.

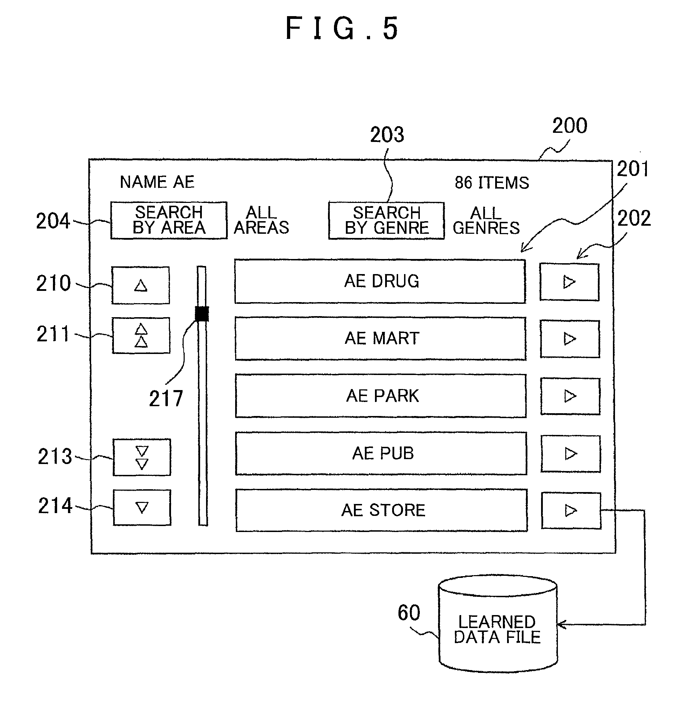

FIG. 5 is a figure that shows an example of the search results screen 200, showing the results that are found by searching when "AE" has been input on the search character input screen 100.
Search results display spaces 201 are spaces for displaying the location names that are found, as a list in the form of location name buttons.
In the example in FIG. 5, five candidates can be displayed at one time, and the location name buttons are displayed for the top five candidates that have been found, "AE DRUG", "AE MART", "AE PARK", "AE PUB", and "AE STORE".

If the user selects "AE STORE", for example, as the desired destination on the search results screen 200, the navigation device 1 reads the information in the destination data file 56 that pertains to "AESTORE", such as the coordinates and the like, and sets "AE STORE" as the destination.
The navigation device 1 also displays information on the screen about the set destination (business hours, special sale information, and the like), displays the position of the destination on a map, searches for a route to the set destination, and provides route guidance.

If any one of the destination candidates that are displayed in list form on the search results screen 200 is selected, the navigation device 1 takes all of the keys for searching (the search key, the alias, the related information) that correspond to the selected destination and stores them as learned keys in the learned data file 60.
For example, assume that the user selects the destination "AE STORE". The navigation device 1 takes all of the keys for searching that correspond to the destination "AE STORE", that is, the search key "AESTORE", the alias "PAMART", and the related information "ES", and stores them as the learned keys.
By this process, the learned data that is in the state that is shown in FIG. 3A is updated by adding the keys for searching that correspond to the selected destination "AE STORE", as shown in FIG. 3B.

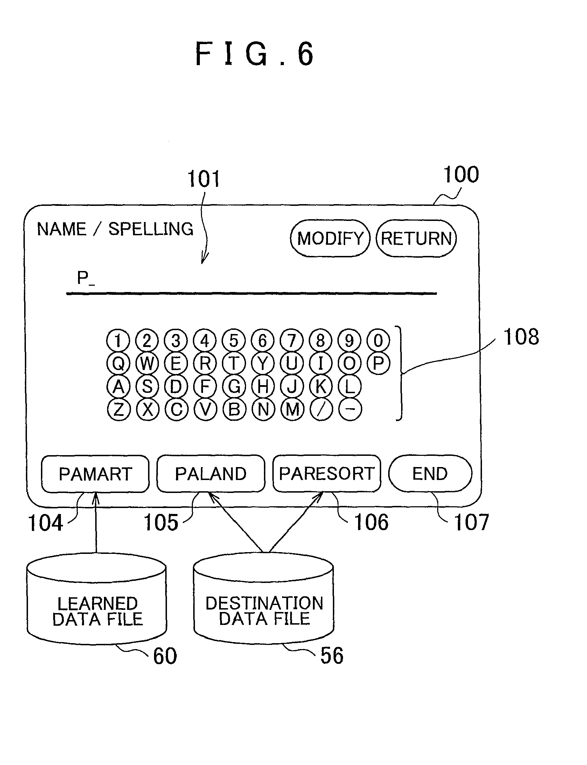

FIG. 6 shows the search character input screen 100 that is displayed by the search processing and the input support processing after the learned data have been updated by adding the keys for searching that correspond to the selected destination.
Note that the selection of the destination "AE STORE" in the previous cycle of the search processing has caused the learned data file 60 to be updated from the state that is shown in FIG. 3A to the state that is shown in FIG. 3B.
Further, the user, who previously searched for the destination "AE STORE", has now learned "PAMART" as the alias.

As shown in FIG. 6, if "P" is input on the search character input screen 100 in the new search processing, the navigation device 1 reads "PAMART" that begins with the input character "P", from the learned data file 60 and displays it on the input character string candidate button 104. The navigation device 1 also reads "PALAND" and "PARESORT", that begins with the input character "P", from the destination data file 56 and displays them in the input character string candidate buttons 105 and 106, respectively.

Because not only the spelling (the search key) of the previously found "AE STORE", but also all of the keys for searching, such as the nickname, the former name, and the like, are stored in this manner as the learned keys in the learned data file 60, the user can receive input support not only for the spelling of "AESTORE" for the previously found "AE STORE", but also for the other keys for searching (the alias, the related information), such as "PAMART" (in a case where "P" is input) and "ES" (in a case where "E" is input).
Furthermore, the user is able to select the desired destination not only based on the location name of the destination, but also based on the alias and the related information.

In the embodiment that is explained above, the navigation device 1 (the search device) was explained on the assumption that English would be used. That is, the navigation device 1 with English specifications was explained, in which the input device 41 that inputs the characters is configured from the alphabetic characters that are the input units for English, and the data that are stored in the destination data file 56, the guidance point data file 57, the learned data file 60, and the like pertain to destination searches that are performed in English.
However, the environment in which the navigation device 1 is used is not limited to an English-language environment. The search processing and the input support processing that are described above can also be used in a navigation device that is specified for any language by adapting the specifications for the input device 41 and the data to the language in question.

For example, the navigation device 1 (the search device) may also be provided with keys that represent the fifty sounds of the Japanese syllabary to make it suitable for Japanese input, to cite just one example of a language other than English.
The device may also be made compatible with input in any other language, such as German, Spanish, French, Arabic, Chinese, Korean, Russian, and the like. In a case where the navigation device 1 is made compatible with Chinese-language input, for example, the input device 41 may be provided with a keyboard that is compatible with Chinese Pinyin input.

The input language does not necessarily have to be the language of the country (the region) where the navigation device 1 is used. For example, the navigation device 1 that uses German-language input may also be used in France. In that case, the data that are stored in the destination data file 56, the learned data file 60, and the like and that are searched when the destination search is performed are made compatible with the input language, such that the data (for example, destination names, learned data, addresses, and the like) can be compared to the input characters.
Note that the data that are searched may also be stored such that they are compatible not only with the input language, but also with the language of the country (the region) where the navigation device 1 is used.
The data that are not searched when the destination search is performed, such as appended information data, for example, do not have to be stored in a form that is compatible with the input language. Even in the data that are not searched, it is acceptable to store, for example, data that are compatible with the input language, data that are compatible the language of the country (the region) where the navigation device 1 is used, and data that are compatible with both the input language and the language of the country (the region) where the navigation device 1 is used.

## Claims

1. A search device, **characterized by** comprising:
a first storage portion (56) that stores information that pertains to a search object in association with a first character string and a second character string that are used to search for the search object;
a second storage portion (60) that, when a search for the search object is performed, reads from the first storage portion (56) the first character string and the second character string for the search object and stores the first character string and the second character string that are read;
an input portion (41) that inputs a character string for searching for the search object; and
a character string presentation portion (104; 105; 106) that, when the character string is input by the input portion (41), searches the second storage portion (60) for and presents one of the first character string and the second character string that begin with a character string that matches the input character string.

2. The search device according to claim 1, **characterized by** comprising:
a search object presentation portion (201) that, when the character string presented by the character string presentation portion (104; 105; 106) is selected, presents the search object that corresponds to the selected character string; and
an output portion (42) that, when the search object presented by the search object presentation portion (201) is selected, reads from the first storage portion (56) the information pertaining to the selected search object and outputs the read information.

3. The search device according to claim 1 or 2, **characterized in that**
the character string presentation portion (104; 105; 106), in a case where the number of the character strings that are found in the second storage portion (60) is less than the number of the character strings that can be presented, searches the first storage portion (56) for and presents at least one character string that begins with a character string that matches the character string input by the input portion (41).

4. The search device according to any one of claims 2 to 3, **characterized in that**
the search object presentation portion (201), in a case where the character string presented by the character string presentation portion (104; 105; 106) is not selected, searches the first storage portion (56) for and presents a search object that corresponds to the character string input by the input portion (41).

5. The search device according to any one of claims 2 to 4, **characterized in that**
the character string presentation portion (104; 105; 106), when at least one character from the beginning of the first character string is input by the input portion (41), searches the first storage portion (56) for and presents the first character string that begins with the input character, **in that**
the search object presentation portion (201), when the first character string presented by the character string presentation portion (104; 105; 106) is selected, presents the search object that corresponds to the selected first character string, **in that**
the second storage portion (60), when the search object presented by the search object presentation portion (201) is selected, stores the first character string and the second character string for the selected search object, and **in that**
the character string presentation portion (104; 105; 106), when at least one character from the beginning of the second character string is input by the input portion (41), searches the second storage portion (60) for and presents the second character string that begins with the input character.

6. The search device according to any one of claims 1 to 5, **characterized in that**
the first storage portion (56) sets a spelling of a name of the search object as the first character string and sets a spelling of at least one of an abbreviation, a nickname, a former name, and a future name of the search object as the second character string.

7. The search device according to any one of claims 1 to 6, **characterized in that**
the search object is a destination in a navigation device (1).

8. A search method, **characterized by** comprising the steps of:
storing information that pertains to a search object in association with a first character string and a second character string that are used to search for the search object in a first storage portion (56);
reading, when a search for the search object is performed, the first character string and the second character string for the search object from the first storage portion (56) and storing in a second storage portion (60) the first character string and the second character string that are read;
receiving from an input portion (41) the input of a character string for searching for the search object; and
searching the second storage portion (60) for and presenting one of the first character string and the second character string that begin with a character string that matches the character string input by the input portion (41).

9. A computer-readable storage medium that stores computer-executable instructions, **characterized by** comprising:
storing information that pertains to a search object in association with a first character string and a second character string that are used to search for the search object in a first storage portion (56);
reading, when a search for the search object is performed, the first character string and the second character string for the search object from the first storage portion (56) and storing in a second storage portion (60) the first character string and the second character string that are read;
receiving from an input portion (41) the input of a character string for searching for the search object; and
searching the second storage portion (60) for and presenting one of the first character string and the second character string that begin with a character string that matches the character string input by the input portion (41).
